# EUROPÄISCHE PATENTSCHRIFT

(11) **EP 3 187 387 B1**
(45) Veröffentlichungstag und Bekanntmachung des Hinweises auf die Patenterteilung: **29.07.2020**
(21) Anmeldenummer: 16150091.3
(22) Anmeldetag: 04.01.2016
(51) Int. Cl.: B60T 13/74, F16D 55/226, F16D 65/18

(54) **FESTSTELLBREMSE**
PARKING BRAKE
FREIN DE STATIONNEMENT

(43) Veröffentlichungstag der Anmeldung: 05.07.2017
(73) Patentinhaber: IMS Gear SE & Co. KGaA, 78166 Donaueschingen (DE)
(72) Erfinder: Hofschulte, Wolfram, 79848 Bonndorf (DE); Fechler, Jens, 78183 Hüfingen (DE); Göpfert, Ronny, 09569 Oederan (DE); Michel, Roland, 09127 Chemnitz (DE)
(74) Vertreter: Westphal, Mussgnug & Partner Patentanwälte mbB

(56) Entgegenhaltungen:
- EP-A1- 2 532 915
- DE-A1-102012 020 765
- US-B1- 6 305 506
- US-B2- 6 997 291

## Beschreibung

Eine erste Kraft, mit welcher die Kniehebeleinrichtung ausgelenkt wird, bewirkt, dass die Kniehebeleinrichtung eine zweite Kraft bereitstellt, welche deutlich größer ist als die erste Kraft. Die Kniehebeleinrichtung bewirkt folglich eine Kraftverstärkung. In der hier beschriebenen Ausführungsform muss die Antriebseinheit nur so dimensioniert werden, dass eine von ihr bereitgestellte Verschiebekraft groß genug ist, um die Kniehebeleinrichtung so weit auszulenken, dass die Kniehebeleinrichtung die benötigte Bremskraft aufbringt. Zudem muss die Verschiebekraft groß genug sein, um den Bremskolben zwischen der Bremsstellung, in welcher der Bremskolben den Gegenstand kontaktiert, und der Offenstellung, in welcher der Bremskolben beabstandet vom Bremskolben angeordnet ist, zu bewegen. Entsprechend kann die Antriebseinheit relativ klein dimensioniert werden, da sie selbst nur die Verschiebekraft, nicht aber die üblicherweise deutlich größere Bremskraft bereitstellen muss. Weiterhin muss sich die Kniehebeleinrichtung abstützen können, um die Bremskraft auf den Bremskolben aufbringen zu können. Hierzu dient die Abstützeinrichtung, die im einfachsten Fall ein vom Bremskolben unabhängiger Anschlag sein kann, der auch raumsparend ausgeführt werden kann. Folglich kann die Feststellbremse als Ganzes sehr kompakt und folglich raumsparend ausgeführt werden, wodurch Gewicht eingespart werden kann. Die Kniehebeleinrichtung selbst benötigt ebenfalls nur einen sehr geringen Bauraum und ist zudem einfach zu fertigen.

Die Kniehebeleinrichtung umfasst einen Kniehebel mit mindestens einem ersten und einem zweiten Schenkel, wobei der erste Schenkel und der zweite Schenkel mit einem Gelenkelement drehbar verbunden sind. Zur Bereitstellung der benötigten Bremskraft genügt es, wenn der Kniehebel zwei Schenkel aufweist, was mit einem konstruktiv einfachen Aufbau möglich ist. Die Größe der aufgebrachten Bremskraft bestimmt sich dadurch, wie weit der Kniehebel gestreckt wird. Je weiter sich die beiden Schenkel einem parallelen Verlauf annähern, umso größer wird die von der Kniehebeleinrichtung aufgebrachte Bremskraft. Insofern lässt sich die Größe der Bremskraft durch das Auslenken des Gelenkelements bestimmen, wozu eine im Vergleich zur Bremskraft deutlich geringere Kraft notwendig ist.

In einer weiteren Ausführungsform kann der Bremskolben einen Hohlraum umschließen und die Antriebseinheit, die Kniehebeleinrichtung und/oder die Abstützeinrichtung ganz oder teilweise im Hohlraum angeordnet sein. Der Bremskolben weist in vielen Fällen eine längliche, zylinderähnliche Form auf, die sich gut dafür eignet, einen Hohlraum zu umschließen, in welchem zumindest Teile der Antriebseinheit, der Kniehebeleinrichtung und/oder der Abstützeinrichtung angeordnet werden können. Hierdurch wird zum einen Bauraum eingespart, so dass die Feststellbremse noch kompakter ausgestaltet werden kann, zum anderen werden die im Hohlraum angeordneten Komponenten vor äußeren Einflüssen wie Staub, Steinschlag und Feuchtigkeit geschützt, was zu einer erhöhten Zuverlässigkeit führt.

Eine weitere Ausführungsform zeichnet sich dadurch aus, dass die Abstützeinrichtung eine Keilanordnung umfasst, welche sich beim Abstützen der Kniehebeleinrichtung an der Abstützeinrichtung ineinander verkeilt. Neben einem relativ einfachen Aufbau hat eine Keilanordnung den Vorteil, dass sie so ausgeführt werden kann, dass sie nur dann zum Aufbringen einer der Bremskraft entgegengesetzt gerichteten Stützkraft blockiert, wenn die Kniehebelanordnung die Bremskraft bereitstellt. Wird keine Bremskraft benötig, kann die Keilanordnung innerhalb der Feststellbremse insbesondere entlang der Längsachse verschoben werden. Im Vergleich zu einem ortsfesten Anschlag wird hierdurch der Vorteil erreicht, dass eine durch den Verschleiß hervorgerufene Dimensionsänderung des Bremskolbens mittels einer entsprechenden Verschiebung der Keilanordnung ausgeglichen werden kann, so dass die benötigte Bremskraft unabhängig vom Verschleiß zur Verfügung steht. Trotz der Verschiebbarkeit der Keilanordnung können sehr hohe Stützkräfte und damit sehr hohe Bremskräfte bereitgestellt werden.

Weiterhin kann die Keilanordnung einen Klemmkeil umfassen, der mit der Kniehebeleinrichtung wirkverbunden ist. Der Klemmkeil kann in eine zum Klemmkeil passend geneigte Ausnehmung eingreifen, wodurch auf konstruktiv einfache Weise eine hohe, der Bremskraft entgegengesetzt gerichtete Stützkraft bereitgestellt werden kann.

Gemäß einer weitergebildeten Ausführungsform umfasst die Keilanordnung einen mittels der Antriebseinheit entlang der Längsachse verschiebbaren Klemmring, der mit dem Klemmkeil zusammenwirkt. Dadurch, dass der Klemmring mittels der Antriebseinheit entlang der Längsachse verschoben werden kann, kann der Abstützort der Keilanordnung mittels der Antriebseinheit verändert werden, beispielsweise, um die Dimensionsänderung des Bremskolbens auszugleichen. Zudem kann die Bremskraft durch eine entsprechende Ansteuerung der Antriebseinheit gezielt bereitgestellt und wieder abgebaut werden.

In einer weiteren Ausführungsform umfasst die Abstützeinrichtung eine relativ zum Bremskolben entlang der Längsachse verschiebbare Stützhülse, an welcher sich die Keilanordnung abstützt. Die Stützhülse kann auch im Hohlraum angeordnet werden, wodurch Raum gespart werden kann. Die Keilanordnung muss sich an einem Gegenstand abstützen können, der unabhängig vom Bremskolben ist. Die Stützhülse selbst kann sich beispielsweise an einem Träger der Fahrzeugkarosserie oder an einem die Feststellbremse umschließenden Gehäuse abstützen. Innerhalb der Stützhülse kann sich die Keilanordnung an einem beliebigen Ort abstützen, so dass die oben beschriebene Ausgleichsmöglichkeit der Dimensionsänderung auf einfache Weise realisiert werden kann.

In einer weitergebildeten Ausführungsform weist die Antriebseinrichtung eine Spindel und eine auf der Spindel entlang der Längsachse bewegbare Mutter auf, wobei die Mutter einen Betätigungsabschnitt zum Auslenken des Gelenkelements umfasst. In dieser Ausführungsform kann auf Seilzüge verzichtet werden, was insofern vorteilhaft ist, als dass keine Umlenkmechaniken für die Seilzüge mehr benötigt werden. Zudem besteht die Gefahr, die vom Reißen der Seilzüge ausgeht, nicht mehr. Der Betätigungsabschnitt kann dabei beispielsweise eine geneigte Ebene aufweisen, die mit dem Gelenkelement oder einer Betätigungsfläche des Kniehebels in Kontakt tritt. Wird die Mutter entlang der Längsachse bewegt, so wird das Gelenkelement radial nach außen ausgelenkt, wodurch der Kniehebel gestreckt und folglich die Bremskraft bereitgestellt wird. Wie bereits erwähnt, bestimmt sich die Größe der Bremskraft danach, wie weit der Kniehebel gesteckt wird. Insofern kann mit der Stellung der Mutter auf der Spindel die Bremskraft eingestellt werden. Da die Kraft zum radialen Auslenken des Gelenkelements im Vergleich zur vom Kniehebel erzeugten Bremskraft relativ klein ist, kann die Spindel im Vergleich zu Lösungen, bei denen die Spindel die Bremskraft aufbringen muss, relativ klein dimensioniert werden. Aufwendige Getriebe zur Kraftverstärkung sind nicht notwendig. Die Spindel selbst ist auch dann so gut wie lastfrei, wenn die Kniehebeleinrichtung die maximale Bremskraft aufbringt.

Es bietet sich an, dass der Klemmring mit der Mutter entlang der Längsachse bewegbar ist. Der Klemmring kann die Spindel umgreifen und auf ihr entlang der Längsachse bewegbar ausgeführt sein. In diesem Fall kann die Antriebseinheit relativ einfach aufgebaut sein, da kein zusätzliches Bauteil zum Bewegen des Klemmrings notwendig ist. Der Klemmring wird von der Mutter mitgeschleppt.

Gemäß einer weiteren Ausführungsform der Feststellbremse ist der Klemmring mittels eines Streckelements mit der Mutter verbunden. Wenn der Klemmring mit dem Klemmkeil klemmend zusammenwirkt, lässt er sich nicht mehr entlang der Spindel bewegen. Wenn der Klemmring fest mit der Mutter verbunden ist, kann auch die Mutter nicht mehr weiter entlang der Längsachse bewegt werden. Ist der Klemmring mit der Mutter mittels des Streckelements verbunden, wird der Klemmring solange mitgeschleppt, bis dass er mit dem Klemmkeil klemmend zusammenwirkt. Die Mutter kann aber weiter entlang der Spindel bewegt werden, um den Kniehebel weiter zu strecken, wodurch die Bremskraft unabhängig von der Position des Klemmrings beim Klemmen eingestellt werden kann.

Ein Ausführungsbeispiel der Erfindung betrifft eine Feststelleinrichtung insbesondere zum Feststellen eines Fahrzeugs, umfassend eine Bremsscheibe, die mit einem Rad des Fahrzeugs drehfest verbunden ist, und eine Festellbremse nach einem der vorherigen Ausführungsformen. Die Vorteile und technischen Effekte, die sich mit diesem Ausführungsbeispiel der Feststelleinrichtung erzielen lassen, entsprechen denjenigen, die für die betreffenden Ausführungsformen der Feststellbremse diskutiert worden sind. Zusammenfassend soll an dieser Stelle die Möglichkeit genannt werden, die Feststellbremse und folglich auch die Feststelleinrichtung raum- und gewichtssparend auszuführen und auf einfache Weise herzustellen. Zudem lässt sich die Feststellbremse und folglich die Feststelleinrichtung mit einer hohen Betriebssicherheit betreiben.

In einem weiteren Ausführungsbeispiel weist der Bremskolben und/oder die Bremsscheibe einen Reibbelag auf. Die Verwendung eines Reibbelags ermöglicht es, eine hohe Bremswirkung bereitzustellen. Zudem wird erreicht, dass der Reibbelag und nicht der Bremskolben und/oder der Gegenstand im Betrieb der Feststelleinrichtung verschleißt, so dass der Bremskolben und/oder der Gegenstand nicht beschädigt werden.

Eine Ausgestaltung der Erfindung betrifft ein Fahrzeug mit einer Feststellbremse nach einem der zuvor erläuterten Ausführungsformen und/oder einer Feststelleinrichtung nach einem der oben beschriebenen Ausführungsbeispiele. Die Vorteile und technischen Effekte, die sich mit dieser Ausgestaltung des Fahrzeugs erzielen lassen, entsprechen denjenigen, die für die betreffenden Ausführungsformen der Feststellbremse diskutiert worden sind. Zusammenfassend soll an dieser Stelle die Möglichkeit genannt werden, die Feststellbremse und folglich auch die Feststelleinrichtung raum- und gewichtssparend auszuführen und auf einfache Weise herzustellen. Insbesondere aufgrund des reduzierten Gewichts lässt sich das Fahrzeug kraftstoffsparender betreiben und dynamischer fahren.

Eine weitere Ausbildung der Erfindung betrifft ein Verfahren zum Feststellen eines Fahrzeugs mit einer Feststelleinrichtung nach einem der zuvor beschriebenen Ausführungsbeispiele, umfassend folgende Schritte:
- Verschieben eines entlang einer Längsachse zwischen einer Bremsstellung und einer Offenstellung verschiebbar gelagerten Bremskolbens in die Bremsstellung mittels einer Antriebseinheit,
- Betätigen einer mit dem Bremskolben zusammenwirkenden Kniehebeleinrichtung mittels der Antriebseinheit, wodurch die Kniehebeleinrichtung die Bremskraft bereitstellt und auf den Bremskolben aufbringt, wobei sich die Kniehebeleinrichtung zum Bereitstellen der Bremskraft an einer Abstützeinrichtung abstützt.

Die Vorteile und technischen Effekte, die sich mit dieser Ausbildung des Verfahrens erzielen lassen, entsprechen denjenigen, die für die betreffenden Ausführungsformen der Feststellbremse diskutiert worden sind. Zusammenfassend soll an dieser Stelle die Möglichkeit genannt werden, die Feststellbremse und folglich auch die Feststelleinrichtung raum- und gewichtssparend auszuführen und auf einfache Weise herzustellen.

Beispielhafte Ausführungsformen der Erfindung werden im Folgenden unter Bezugnahme auf die beigefügten Zeichnungen näher erläutert. Es zeigen
- Figur 1: eine perspektivische Ansicht einer Ausführungsform einer Feststellbremse,
- Figur 2: eine Explosionsdarstellung der in Figur 1 dargestellten Ausführungsform der Feststellbremse, und
- Figuren 3a-f): prinzipielle Darstellung einer Feststelleinrichtung zur Erläuterung der Funktionsweise der Feststellbremse und der Feststelleinrichtung.

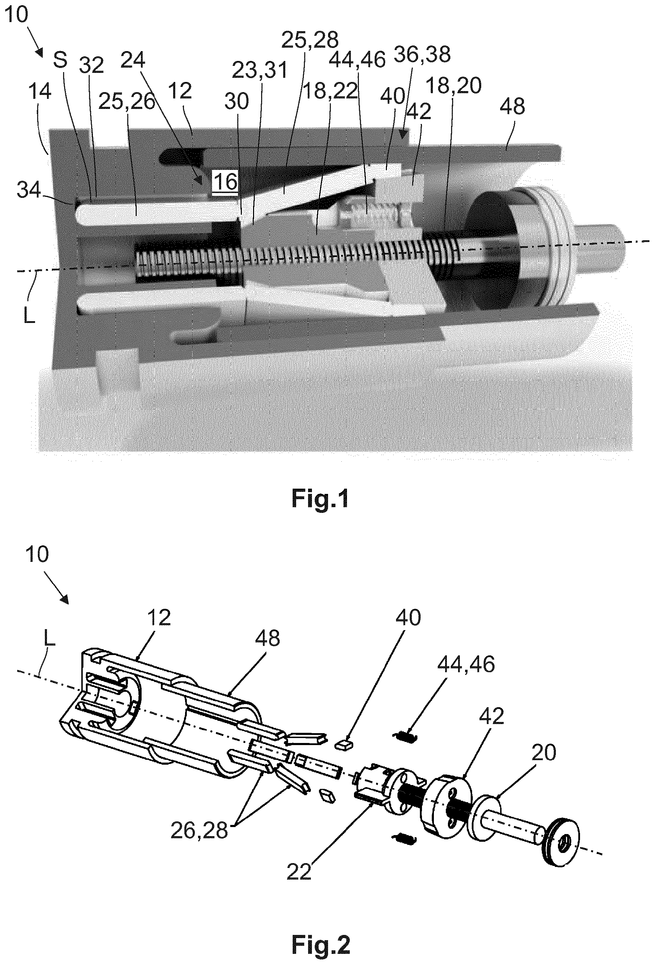

Die in den Figur 1 und 2 dargestellte Ausführungsform einer erfindungsgemäßen Feststellbremse 10 umfasst einen Bremskolben 12, der eine im Wesentlichen rohrartige Form mit einer geschlossenen Frontfläche 14 aufweist und einen Hohlraum 16 umschließt, welcher eine Längsachse L definiert. Weiterhin weist die Feststellbremse 10 eine Antriebseinheit 18 auf, welche eine koaxial zur Längsachse L verlaufende Spindel 20 umfasst, die sich in den Hohlraum 16 hinein erstreckt. Die Spindel 20 kann mit einem nicht dargestellten Motor angetrieben werden, der ebenfalls koaxial zur Längsachse L oder aber achsparallel angeordnet sein kann. Die Antriebseinheit 18 weist zudem eine Mutter 22 auf, die mit der Spindel 20 entlang der Längsachse L durch Drehen der Spindel 20 entlang der Längsachse L vor- und zurück bewegt werden kann. Die Mutter 22 weist einen Betätigungsabschnitt 23 auf, der in der dargestellten Ausführungsform konusförmig ausgebildet ist.

Darüber hinaus umfasst die Feststellbremse 10 eine im Hohlraum 16 angeordnete Kniehebeleinrichtung 24, welche in der dargestellten Ausführungsform insgesamt drei um die Längsachse L angeordnete Kniehebel 25 mit jeweils einem ersten Schenkel 26 und einen zweiten Schenkel 28 aufweist. Der erste Schenkel 26 und der zweite Schenkel 28 sind mit einem Gelenkelement 30 um eine Achse drehbar miteinander verbunden, die in einer senkrecht zur Längsachse L verlaufenden Ebene liegt. Das Gelenkelement 30 ist dabei so aufgebaut, dass einer der beiden Schenkel 26, 28 eine rinnenförmige Mulde aufweist, in welche eine entsprechend geformte Erweiterung des anderen Schenkels 26, 28 drehbar eingreift. In der dargestellten Ausführungsform weist der zweite Schenkel 28 eine Betätigungsfläche 31 auf, die mit dem Betätigungsabschnitt 23 der Mutter 22 in Kontakt steht. Der erste Schenkel 26 ist dabei in einer vom Bremskolben 12 gebildeten Ausnehmung 32 entlang der Längsachse L verschiebbar gelagert, wobei die Ausnehmung ein zur Frontfläche 14 hinzeigendes geschlossenes Ende 34 aufweist. Im in Figur 1 dargestellten Zustand verläuft der erste Schenkel 26 im Wesentlichen parallel zur Längsachse L und füllt in der in Bezug auf die Längsachse L radialen Richtung die Ausnehmung 32 nicht vollständig aus. Der erste Schenkel 26 liegt radial nach innen an der Ausnehmung 32 an, während radial nach außen ein Spalt S zwischen dem ersten Schenkel 26 und der Ausnehmung 32 vorhanden ist.

Der zweite Schenkel 28 wirkt mit einer Abstützeinrichtung 36 zusammen, die zumindest teilweise im Hohlraum 16 angeordnet ist. Die Abstützeinrichtung 36 umfasst eine Keilanordnung 38, welche einen mit dem zweiten Schenkel 28 wirkverbundenen Klemmkeil 40 umfasst. In der dargestellten Ausführungsform ist die Wirkverbindung dadurch realisiert, dass der zweite Schenkel 28 an seinem freien Ende eine rinnenförmige Mulde aufweist, die mit einer entsprechend ausgebildete Erweiterung des Klemmkeils 40 derart zusammenwirkt, dass der zweite Schenkel 28 um eine Achse drehbar mit dem Klemmkeil 40 verbunden ist, die in einer senkrecht zur Längsachse L verlaufenden Achse liegt. Der Klemmkeil 40 ist radial nach innen auf einem Klemmring 42 gelagert, der die Spindel 20 umgreift und mit der Mutter 22 entlang der Längsachse L verschiebbar ist. Im Gegensatz zur Mutter 22 weist der Klemmring 42 kein mit der Spindel 20 zusammenwirkendes Gewinde auf, sondern kann auf dem Gewinde der Spindel 20 entlang gleiten. Der Klemmring 42 ist mittels eines Streckelements 44 mit der Mutter 22 verbunden, welches im dargestellten Beispiel als eine Feder 46 ausgeführt ist.

Radial nach außen ist der Klemmkeil 40 auf einer Stützhülse 48 gelagert, die zumindest teilweise im Hohlraum 16 angeordnet und relativ zum Bremskolben 12 entlang der Längsachse L verschiebbar im Bremskolben 12 gelagert ist. Hierzu ist die Stützhülse 48 teleskopartig in den Hohlraum 16 des Bremskolbens eingeschoben.

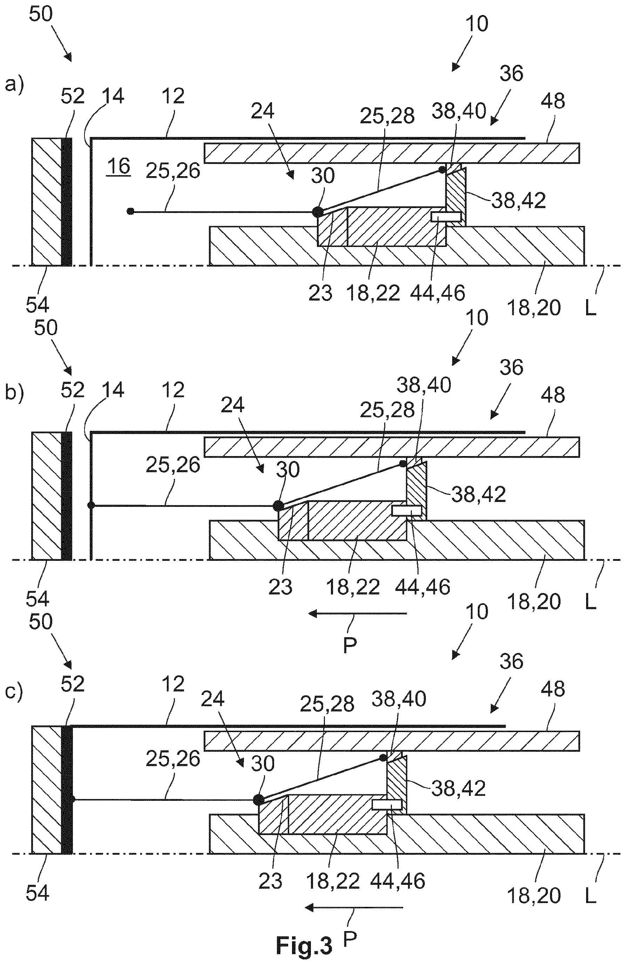

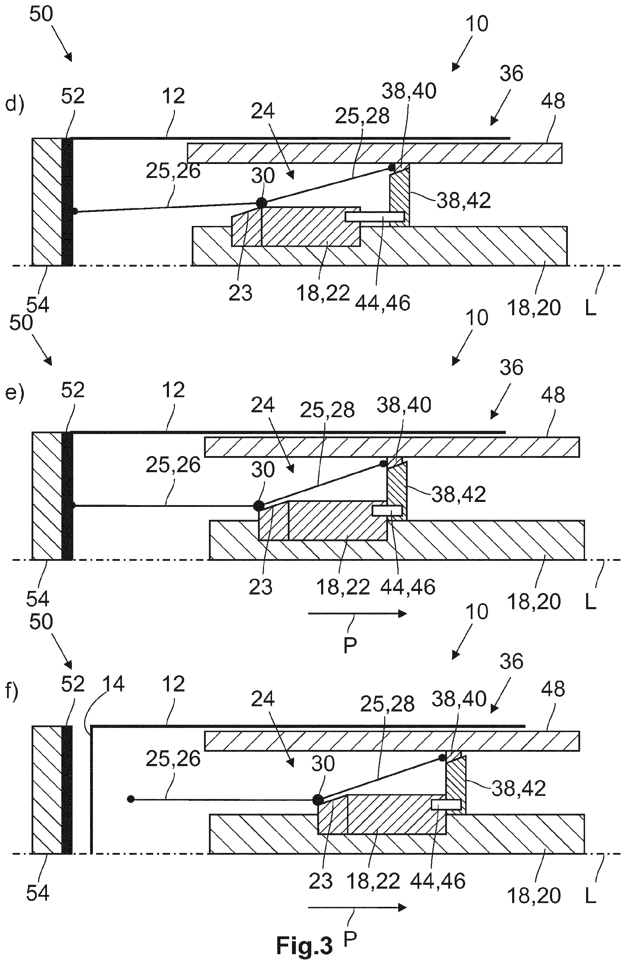

In den Figuren 3a) bis 3f) ist zur Verdeutlichung der Funktionsweise eine Feststelleinrichtung 50, welche eine Feststellbremse 10 mit dem beschriebenen Aufbau umfasst, anhand einer prinzipiellen Darstellung gezeigt. In Figur 3a) befindet sich der Bremskolben 12 in einer Offenstellung, in welcher er beabstandet von einem Reibbelag 52 angeordnet ist. Der Reibbelag 52 ist auf einer Bremsscheibe 54 aufgebracht, die drehfest mit einem nicht dargestellten Rad eines ebenfalls nicht dargestellten Fahrzeugs verbunden ist. Der erste Schenkel 26 des Kniehebels 25 ist beabstandet vom geschlossenen Ende 34 der Ausnehmung 32 angeordnet, was symbolisch durch den Abstand zwischen dem ersten Schenkel 26 und dem Bremskolben 12 dargestellt ist. Durch Drehen der Spindel 20 wird die Mutter 22 in die in Figur 3b) mit dem Pfeil P gekennzeichneten Richtung entlang der Längsachse L zum Reibbelag 52 hin verschoben. Da die Mutter 22 mittels des Streckelements 44 mit dem Klemmring 42 verbunden ist, folgt der Klemmring 42 der Bewegung der Mutter 22. Der Klemmring 42 verschiebt den Klemmkeil 40 ebenfalls zum Reibbelag 52 hin, wobei der Klemmkeil 40 auf der Innenseite der Stützhülse 48 entlang gleitet. Die Stützhülse 48 selbst wird nicht mit bewegt. Der Klemmkeil 40 schiebt den Kniehebel 25 ebenfalls solange zum Reibbelag 52 in, bis dass der erste Schenkel 26 am geschlossenen Ende 34 der Ausnehmung 32 anschlägt (vgl. Figuren 1 und 3b)). Wird die Spindel 20 weiter gedreht, schiebt der Kniehebel 25 den Bremskolben 12 solange vor, bis dass er am Reibbelag 52 anliegt (siehe Figur 3c)) und die Bremsstellung erreicht hat. Wird die Spindel 20 weiter gedreht und die Mutter 22 weiter zum Reibbelag 52 hin bewegt, kann der Kniehebel 25 den Bremskolben 12 nicht mehr weiter zum Reibbelag 52 hin bewegen. Der Betätigungsabschnitt 23 der Mutter 22 schiebt das Gelenkelement 30 radial nach außen, wobei der Betätigungsabschnitt 23 an der Betätigungsfläche 31 des zweiten Schenkels entlang gleitet. Der vom ersten Schenkel 26 und vom zweiten Schenkel 28 eingeschlossene Winkel wird vergrößert, wodurch der Kniehebel 25 gestreckt wird. Der erste Schenkel 26 kann sich aufgrund des Spalts S in der Ausnehmung 32 drehen und verläuft dann nicht mehr parallel zur Längsachse L. Aufgrund der Streckung des Kniehebels 25 wird der Klemmkeil 40 etwas vom Reibbelag 52 weg verschoben, so dass er sich zwischen dem Klemmring 42 und der Stützhülse 48 verkeilt. Sobald der Klemmkeil 40 verkeilt ist, ist die Position des Klemmkeils 40 und des Klemmrings 42 festgelegt. Wird die Mutter 22 weiter zum Reibbelag 52 hin verschoben, entfernen sich die Mutter 22 und der Klemmring 42 voneinander und das Streckelement 44 wird gestreckt (vgl. Figur 3d)). Wird der Kniehebel 25 weiter gestreckt, wird der Bremskolben 12 aufgrund der Zunahme seiner Erstreckung bezüglich der Längsachse L stärker gegen den Reibbelag 52 und die Bremsscheibe 54 gepresst, wodurch eine Bremskraft auf den Reibbelag 52 und die Bremsscheibe 54 aufgebaut wird. Je weiter der Kniehebel 25 gestreckt wird, desto stärker ist die Bremskraft. Infolgedessen können sich die Bremsscheibe 54 und folglich das Rad nicht mehr drehen, so dass das Fahrzeug nun festgestellt ist.

Wenn das Fahrzeug bewegt werden soll, wird die Spindel 20 in die entgegengesetzte Richtung gedreht, so dass die Mutter 22 vom Reibbelag 52 weg bewegt wird. Der Kniehebel 25 verkürzt sich wieder, so dass die Bremskraft nachlässt. Die Mutter 22 kommt wieder zur Anlage mit dem Klemmring 42 und schiebt ihn vom Reibbelag 52 weg, so dass die Verkeilung des Klemmkeils 40 aufgehoben wird. Nun wird keine Bremskraft mehr auf den Reibbelag 52 aufgebracht (Figur 3e)). Wird die Mutter 22 weiter vom Reibbelag 52 weg bewegt, wird der Kniehebel 25 ebenfalls vom Reibbelag 52 weg bewegt, wozu nicht dargestellte Mitnehmer oder Anschläge vorgesehen sein können. Der erste Schenkel 26 liegt dann nicht mehr am geschlossenen Ende 34 der Ausnehmung 32 an. Die Anschläge können so ausgebildet sein, dass die Mutter 22 auch den Bremskolben 12 vom Reibbelag 52 weg bewegt, um den Bremskolben in die Offenstellung zurückzustellen und um zu verhindern, dass der Bremskolben 12 auf dem Reibbelag 52 schleift. Alternativ können nicht dargestellte Rückstellfedern vorgesehen sein.

Dadurch, dass die Keilanordnung erst dann blockiert, wenn die Kniehebelanordnung 38 den Bremskolben 12 nicht mehr weiter gegen den Reibbelag 62 schieben kann, wird der Verschleiß des Reibbelags 62 automatisch ausgeglichen. Zudem ist die Spindel 20 beim Aufbringen der Bremskraft lastfrei, so dass sie durch die Bremskraft nicht beschädigt oder blockiert werden kann.

### Bezugszeichenliste

- 10: Feststellbremse
- 12: Bremskolben
- 14: Frontfläche
- 16: Hohlraum
- 18: Antriebseinheit
- 20: Spindel
- 22: Mutter
- 23: Betätigungsabschnitt
- 24: Kniehebeleinrichtung
- 25: Kniehebel
- 26: erster Schenkel
- 28: zweiter Schenkel
- 30: Gelenkelement
- 31: Betätigungsfläche
- 32: Ausnehmung
- 34: geschlossenes Ende
- 36: Abstützeinrichtung
- 38: Keilanordnung
- 40: Klemmkeil
- 42: Klemmring
- 44: Streckelement
- 46: Feder
- 48: Stützhülse
- 50: Feststelleinrichtung
- 52: Reibbelag
- 54: Bremsscheibe

- L: Längsachse
- P: Pfeil
- S: Spalt

## Patentansprüche

1. Feststellbremse insbesondere für ein Fahrzeug, umfassend
- einen entlang einer Längsachse (L) zwischen einer Bremsstellung und einer Offenstellung verschiebbar gelagerten Bremskolben (12), mit welchem eine Bremsscheibe (54) durch Aufbringen einer Bremskraft feststellbar ist, wenn sich der Bremskolben (12) in der Bremsstellung befindet,
- eine Antriebseinheit (18), mit welcher der Bremskolben (12) entlang der Längsachse (L) zwischen der Bremsstellung und der Offenstellung verschiebbar ist, **gekennzeichnet durch**
- eine mit dem Bremskolben (12) zusammenwirkende Kniehebeleinrichtung (24), welche einen Kniehebel (25) mit mindestens einem ersten Schenkel (26) und einem zweiten Schenkel (28) umfasst, wobei der erste Schenkel (26) und der zweite Schenkel (28) mit einem Gelenkelement (30) drehbar verbunden sind und welche mittels der Antriebseinheit (18) betätigbar ist, wodurch die Kniehebeleinrichtung (24) die Bremskraft bereitstellt und auf den Bremskolben (12) aufbringt, und
- eine Abstützeinrichtung (36), an welcher sich die Kniehebeleinrichtung (24) zum Bereitstellen der Bremskraft abstützt.

2. Feststellbremse nach Anspruch 1,
**dadurch gekennzeichnet, dass** der Bremskolben (12) einen Hohlraum (16) umschließt und die Antriebseinheit (18), die Kniehebeleinrichtung (24) und/oder die Abstützeinrichtung (36) ganz oder teilweise im Hohlraum (16) angeordnet sind.

3. Feststellbremse nach einem der Ansprüche 1 oder 2,
**dadurch gekennzeichnet, dass** die Abstützeinrichtung (36) eine Keilanordnung (38) umfasst, welche sich beim Abstützen der Kniehebeleinrichtung (24) an der Abstützeinrichtung (36) ineinander verkeilt.

4. Feststellbremse nach Anspruch 3,
**dadurch gekennzeichnet, dass** die Keilanordnung (38) einen Klemmkeil (40) umfasst, der mit der Kniehebeleinrichtung (24) wirkverbunden ist.

5. Feststellbremse nach Anspruch 4,
**dadurch gekennzeichnet, dass** die Keilanordnung (38) einen mittels der Antriebseinheit (18) entlang der Längsachse (L) verschiebbaren Klemmring (42) umfasst, der mit dem Klemmkeil (40) zusammenwirkt.

6. Feststellbremse nach einem der Ansprüche 3 bis 5,
**dadurch gekennzeichnet, dass** die Abstützeinrichtung (36) eine relativ zum Bremskolben (12) entlang der Längsachse (L) verschiebbare Stützhülse (48) umfasst, an welcher sich die Keilanordnung (38) abstützt.

7. Feststellbremse nach einem der vorherigen Ansprüche
**dadurch gekennzeichnet, dass** die Antriebseinrichtung eine Spindel (20) und eine auf der Spindel (20) entlang der Längsachse (L) bewegbare Mutter (22) aufweist, wobei die Mutter (22) einen Betätigungsabschnitt (23) zum Auslenken des Gelenkelements (30) umfasst.

8. Feststellbremse nach den Ansprüchen 5 und 7,
**dadurch gekennzeichnet, dass** der Klemmring (42) mit der Mutter (22) entlang der Längsachse (L) bewegbar ist.

9. Feststellbremse nach Anspruch 8,
**dadurch gekennzeichnet, dass** der Klemmring (42) mittels eines Streckelements (44) mit der Mutter (22) verbunden ist.

10. Feststelleinrichtung insbesondere zum Feststellen eines Fahrzeugs, umfassend
- eine Bremsscheibe (54), die mit einem Rad des Fahrzeugs drehfest verbunden ist, und
- eine Festellbremse (10) nach einem der vorherigen Ansprüche.

11. Feststelleinrichtung nach Anspruch 10,
**dadurch gekennzeichnet, dass** der Bremskolben (12) und/oder die Bremsscheibe (54) einen Reibbelag (52) aufweist.

12. Fahrzeug mit einer Feststellbremse nach einem der Ansprüche 1 bis 9 und/oder einer Feststelleinrichtung (50) nach einem der Ansprüche 10 oder 11.

13. Verfahren zum Feststellen eines Fahrzeugs mit einer Feststelleinrichtung (50) nach einem der Ansprüche 10 oder 11, umfassend folgende Schritte
- Verschieben eines entlang einer Längsachse (L) zwischen einer Bremsstellung und einer Offenstellung verschiebbar gelagerten Bremskolbens (12) in die Bremsstellung mittels einer Antriebseinheit,
- Betätigen einer mit dem Bremskolben (12) zusammenwirkenden Kniehebeleinrichtung (24) mittels der Antriebseinheit (18), wobei die Kniehebeleinrichtung (24) einen Kniehebel (25) mit mindestens einem ersten Schenkel (26) und einem zweiten Schenkel (28) umfasst, wobei der erste Schenkel (26) und der zweite Schenkel (28) mit einem Gelenkelement (30) drehbar verbunden sind wodurch die Kniehebeleinrichtung (24) die Bremskraft bereitstellt und auf den Bremskolben (12) aufbringt, wobei sich die Kniehebeleinrichtung (24) zum Bereitstellen der Bremskraft an einer Abstützeinrichtung (36) abstützt.

## Claims

1. Parking brake, in particular for a vehicle, comprising
- a brake piston (12), moveably mounted along a longitudinal axis (L) between a braking position and a released position and which can be used to adjust a brake disc (54) when the brake piston (12) is in the braking position by applying a braking force,
- a drive unit (18) with which the brake piston (12) can be moved along the longitudinal axis (L) between the braking position and the released position, **characterized in that**
- a toggle lever device (24) that interacts with the brake piston (12) and which comprises a toggle lever with at least one first member (26) and with a second member (28), wherein the first member (26) and the second member (28) are rotatably connected to a joint element (30) and can be actuated by the drive unit (18), by means of which the toggle lever device (24) provides the braking force and applies this to the brake piston (12), and
- a supporting device (36) on which the toggle lever device (24) is supported in order to provide the braking force.

2. Parking brake in accordance with claim 1,
**characterized in that** the braking piston (12) encompasses cavity (16) and **in that** the drive unit (18), the toggle lever device (16) and/or the supporting device (36) is(are) completely or partially disposed in the cavity (16).

3. Parking brake in accordance with claim 1 or 2,
**characterized in that** the supporting device (36) comprises a wedge arrangement (38) that is interlocked when the toggle lever device (24) is supported on the supporting device (36).

4. Parking brake in accordance with claim 3,
**characterized in that** the wedge arrangement (38) comprises a clamping wedge (40) that is operatively connected to the toggle lever device (24).

5. Parking brake in accordance with claim 4,
**characterized in that** the wedge arrangement (38) comprises a clamping ring (42) that is movable along the longitudinal axis (L) by means of the drive unit (18) and that interacts with the clamping wedge (40).

6. Parking brake in accordance with any of claims 3 to 5,
**characterized in that** the supporting device (36) comprises a supporting sheath (48) that is movable along the longitudinal axis (L) relative to the brake piston (12) and on which the wedge arrangement (38) is supported.

7. Parking brake in accordance with any of the preceding claims,
**characterized in that** the drive device comprises a spindle (20) and a nut (22) that is moveable along the longitudinal axis (L), wherein the nut (22) comprises an activation segment (23) to deflect the joint element (30).

8. Parking brake in accordance with the claims 5 and 7,
**characterized in that** the clamping ring (42) is moveable with the nut (22) along the longitudinal axis (L).

9. Parking brake in accordance with claim 8,
**characterized in that** the clamping ring (42) is connected to the nut (22) by mean of a stretch element (44).

10. Parking device, in particular for immobilizing a vehicle, comprising
- a brake disc (54) that is non-rotatably connected to one wheel of the vehicle, and
- a parking brake (10) in accordance with any of the preceding claims.

11. Parking device in accordance with claim 10,
**characterized in that** the brake piston (12) and/or the brake disc (54) has a friction pad (52).

12. Vehicle with a parking brake in accordance with any of claims 1 to 9 and/or a braking device (50) in accordance with either of claims 10 or 11.

13. Method for immobilizing a vehicle with a parking device (50) in accordance with either of claims 10 or 11, comprising the following steps
- moving a brake piston (12), which is moveably mounted between a braking position and a released position, into the braking position by means of a drive unit,
- activating a toggle lever device (24) that interacts with the brake piston (12) by means of the drive unit (18), wherein the toggle lever device (24) comprises a toggle lever (25) with at least one first member (26) and a second member (28), wherein the first member (26) and the second member (28) are rotatably connected by means of a joint element (30), due to which the toggle lever device (24) provides the braking force and applies it to the brake piston (12), wherein the toggle lever device (24) is supported on a supporting device (36) in order to provide the braking force.

## Revendications

1. Frein de stationnement notamment pour un véhicule comprenant :
- un piston de frein (12) monté coulissant selon un axe longitudinal (L) entre une position de freinage et une position ouverte, pour bloquer un disque de frein (54) par l'application d'une force de frein lorsque le piston de frein (12) est en position serrée,
- une unité d'entraînement (18) qui coulisse le piston de frein (12) selon l'axe longitudinal (L) entre la position serrée et la position ouverte,
frein de stationnement **caractérisé par**
- une installation à genouillère (24) coopérant avec le piston de frein (12) et comportant un levier à genouillère (25) ayant au moins une première branche (26) et une seconde branche (28), la première branche (26) et la seconde branche (28) étant reliées en rotation par une articulation (30) et cette installation à genouillère (24) est actionnée par une unité d'entraînement (18) de façon à générer la force de frein et l'appliquer au piston de frein (12), et
- une installation d'appui (36) contre laquelle l'installation de genouillère (24) s'appuie pour fournir la force de frein.

2. Frein de stationnement selon la revendication 1,
**caractérisé en ce que**
le piston de frein (12) entoure une cavité (16) et l'unité d'entraînement (18), l'installation à genouillère (24) et/ou l'installation d'appui (36) sont logées totalement ou partiellement dans la cavité (16).

3. Frein de stationnement selon l'une des revendications 1 ou 2,
**caractérisé en ce que**
l'installation d'appui (36) comprend un dispositif à coin (38) qui se coince contre l'installation d'appui (36) lorsque l'installation à genouillère (24) est mise en appui.

4. Frein de stationnement selon la revendication 3,
**caractérisé en ce que**
le dispositif à coin (38) comporte un coin de serrage (40) coopérant avec l'installation de levier à genouillère (24).

5. Frein de stationnement selon la revendication 4,
**caractérisé en ce que**
le dispositif à coin (38) comporte une couronne de serrage (42) coulissée selon l'axe longitudinal (L) par l'unité d'entraînement (18) et coopérant avec le coin (40).

6. Frein de stationnement selon l'une des revendications 3 à 5, **caractérisé en ce que**
l'installation d'appui (36) comprend un manchon d'appui (48) coulissant selon l'axe longitudinal (L) par rapport au piston de frein (12), le dispositif de coin (38) s'appuyant contre le manchon.

7. Frein de stationnement selon l'une des revendications précédentes, **caractérisé en ce que**
l'installation d'entraînement comporte une broche (20) et un écrou (22) mobile le long de l'axe (L) sur la broche (20), l'écrou (22) comprenant un segment d'actionnement (23) pour dévier l'articulation (30).

8. Frein de stationnement selon les revendications 5 et 7,
**caractérisé en ce que**
la couronne de serrage (42) est mobile le long de l'axe (L) avec l'écrou (22).

9. Frein de stationnement selon la revendication 8,
**caractérisé en ce que**
la couronne de serrage (42) est reliée à l'écrou (22) par un élément d'extension (44).

10. Installation d'immobilisation notamment pour immobiliser un véhicule comprenant :
- un disque de frein (54) relié solidairement en rotation à une roue du véhicule, et
- un frein de stationnement (10) selon l'une des revendications précédentes.

11. Installation d'immobilisation selon la revendication 10,
**caractérisé en ce que**
le piston de frein (12) et/ou le disque de frein (54) comportent une garniture de friction (52).

12. Véhicule équipé d'un frein de stationnement selon l'une des revendications 1 à 9 et/ou d'une installation d'immobilisation (50) selon l'une des revendications 10 ou 11.

13. Procédé d'immobilisation d'un véhicule équipé d'une installation d'immobilisation (50) selon l'une des revendications 10 ou 11, comprenant les étapes suivantes consistant à :
- déplacer un piston de frein (12) monté coulissant le long d'un axe longitudinal (L) entre lune position serrée et une position ouverte, mis en position serrée par une unité d'entraînement,
- actionner une installation à genouillère (24) coopérant avec le piston de frein (12) à l'aide de l'unité d'entraînement (18), l'installation à genouillère (24) comportant un levier à genouillère (25) ayant au moins une première branche (26) et une seconde branche (28), la première branche (26) et la seconde branche (28) étant reliées en rotation par une articulation (30) de façon que l'installation à genouillère (24) fournisse la force de frein et l'applique au piston de frein (12), l'installation à genouillère (24) s'appuyant contre une installation d'appui (36) pour fournir la force de frein.
